# EUROPEAN PATENT SPECIFICATION

(11) **EP 3 708 826 B1**
(45) Date of publication and mention of the grant of the patent: **19.04.2023**
(21) Application number: 20151646.5
(22) Date of filing: 11.06.2015
(51) Int. Cl.: F03D 1/06

(54) **A TIP SYSTEM FOR A WIND TURBINE BLADE**
SPITZENSYSTEM FÜR EINE WINDTURBINENSCHAUFEL
SYSTÈME DE POINTE D'UNE PALE DE TURBINE ÉOLIENNE

(30) Priority: 11.06.2014 GB 201410429
(43) Date of publication of application: 16.09.2020
(62) Divisional of application: 15729795.3
(73) Proprietor: LM Wind Power A/S, 6000 Kolding (DK)
(72) Inventor: DOBBE, Antonius Cornelis, 6000 Kolding (DK); SCHURING, Roelof Willem, 6000 Kolding (DK); BAKKUM, Maurits Chrstiaan, 6000 Kolding (DK); BENSSOUSSAN, Régis Jaques, 1705 ST Heerhugowaard (Noord-Holland) (NL); ALKEMADE, Harry, 6000 Kolding (DK)
(74) Representative: COPA Copenhagen Patents

(56) References cited:
- WO-A1-2013/021236
- DE-A1-102010 015 392
- GB-A- 2 488 099

## Description

### Field of the Invention

The present invention relates to a tip system for a wind turbine blade, and associated methods of manufacture and assembly.

### Background of the Invention

To improve adaptability and manufacturability of wind turbine blades, blades can be provided in modular form, having for example a separate tip section from a mainboard and/or root section.

DE 10 2010 015392 A1 discloses a sectionised blade with two blade sections having spars that have end faces that fit together in comb structure.

WO 2013/021236 A1 discloses a sectionised blade with two blade sections that have projecting elements that are connected to each other.

It is an object of the invention to provide improved designs of modular wind turbine blade designs.

### Summary of the Invention

The invention is defined by claim 1. The dependent claims define embodiments of the invention. These embodiments and additional non-claimed embodiments, which are examples of techniques to help understand the claimed invention, are further described below. The described embodiments are not to be regarded as necessarily defining the invention unless they fall within the scope of the claims.

The present disclosure further describes a method of manufacturing a wind turbine blade by joining a tip section of the blade and a mainboard section of the blade at a joining section, wherein
- the tip section comprises a first aerodynamic shell with a first load-carrying principal laminate integrated in the first aerodynamic shell, and
- the mainboard section comprising a second aerodynamic shell with a second load-carrying principal laminate integrated in the second aerodynamic shell, wherein
- the joining section is formed at a first end of the tip section and a second end of the mainboard section, wherein the method comprises the steps of:
   a) forming the tip section such that the first load-carrying principal laminate includes a first recess at the first end of the tip section, the first recess comprising a first taper section where a thickness of the first load-carrying principal laminate is tapered in thickness towards the first end of the tip section,
   b) forming the mainboard section such that the second load-carrying principal laminate includes a second recess at the second end of the mainboard section, the second recess comprising a second taper section where a thickness of the second load-carrying principal laminate is tapered in thickness towards the second end of the mainboard section,
   c) positioning the tip section and the mainboard section in longitudinal extension of each other such that the first recess and the second recess are aligned with each other at the joining section,
   d) arranging a first layup in the first recess and the second recess and
   e) joining said first layup to the first recess and the second recess such that a first scarf joint is formed between the first layup and the first taper section and the second taper section.

The present manufacturing method forms a robust and durable joint between the mainboard and tip sections of a modular wind turbine blade. The method introduces no extra loads or stresses in the load carrying structure, whereby the method provides a blade of a durability and quality equaling a common non-modular wind turbine blade. Further, the method provides the opportunity to shape the layup such that the intended aerodynamic surface may be achieved and a smooth transition from the tip section to the mainboard section may be achieved.

In one example of the disclosure the method further comprising the steps of
a1) forming the tip section to also comprise, at the first end, a first leading edge recess in a first leading edge laminate and a first trailing edge recess in a first trailing edge laminate, the first leading edge recess comprising a first leading edge taper section where a thickness of the first leading edge laminate is tapered in thickness towards the first end and the first trailing edge recess comprising a first trailing edge taper section where a thickness of the first trailing edge laminate is tapered in thickness towards the first end,
b1) forming the mainboard section to also comprise, at the second end, a second leading edge recess in a second leading edge laminate and a second trailing edge recess in a second trailing edge laminate, the second leading edge recess comprising a second leading edge taper section where a thickness of the second leading edge laminate is tapered in thickness towards the second end and the second trailing edge recess comprising a second trailing edge taper section where a thickness of the second trailing edge laminate is tapered in thickness towards the second end,
d1) arranging a second layup in the first leading edge recess and in the second leading edge recess,
d2) arranging a third layup in the first trailing edge recess and in the second trailing edge recess,
e1) joining said second layup to the first leading edge recess and the second leading edge recess such that a second scarf joint is formed between the second layup and the first leading edge taper section and the second leading edge taper section
e2) joining said third layup to the first trailing edge recess and the second trailing edge recess such that a third scarf joint is formed between the third layup and the first trailing edge taper section and the second trailing edge taper section.

It may be beneficial to also join the mainboard- and tip sections at the leading edge and trailing edge of the blade using scarf joints in the local laminates to provide an advantageous structurally integrated wind turbine blade.

In some examples of the disclosure, it may be advantageous to have fibres from the principal load carrying laminates and/or from the leading edge- and trailing edge laminates of the tip section and mainboard section respectively protruding into the recesses and into the layups, whereby particularly strong integration of the lay ups with the mainboard - and tip sections may be achieved.

For example, parts of fibre plies comprised in the principal load carrying laminate of the mainboard section may protrude at the taper section and into the air in the recess. These protruding fibre material can then be firmly integrated to a dry fibre layup, becoming an integral part of the layup, and after infusion with resin, a particularly strong connection may be formed. Of course such protruding fibre material may be provided in all tapering sections, partly pre-filling the recess.

According to further examples of the disclosure, the first layup, and optionally the second layup and the third layup, is/are selected from the group consisting of a fibre material, a resin, a pre-formed part, an adhesive, a pre-preg material, a pre-cured element or any combination thereof.

The layup material for attachment to the recesses in the laminate(s) of the tip section and of the mainboard section may be varied for different reasons, including price, production speed, ease of handling and complexity of arranging such layups.

In an example of the disclosure, step d) comprises arranging a pre-formed circumferentially extending shell attachment element in the first recess and the second recess, optionally said shell attachment element extending to the first leading edge recess and/or the second leading edge recess, the first trailing edge recess and/or the second trailing edge recess, said shell attachment element comprising the first layup and, optionally, the second and/or third layups.

It may be beneficial to have one or more layups comprised in a preformed part. According to this embodiment, the preformed part may be arranged to attached to the recesses by gluing. The joint may be further strengthened, for example, by overlaminating, so that at least the principal main laminates of the tip- and mainboard sections, that is, the first principal main laminate and the second principal main laminate, and optionally also the leading edge laminates of the tip- and mainboard sections as well as the trailing edge laminates of the tip- and mainboard sections, are overlaminated at predesigned positions in the shell attachment element. Further, the overlamination may form the outer surface of the blade and thus provide a smooth aerodynamic surface.

In an example of the disclosure, said first recess, said second recess, said first leading edge recess, said second leading edge recess, said first trailing edge recess and said second trailing edge recess overlap to form a single recess around the circumference of the tip section and the mainboard section.

It may be advantageous to arrange one or more layups around the whole circumference of the two sections, respectively, to achieve a substantially continuous scarf joint around the circumference of the wind turbine blade.

In further examples of the disclosure, the joining step e), and optionally steps e1) and e2), comprise
wetting a fibre material with resin and curing said resin, said fibre material being a pre-preg material and/or dry fibre material which then is infused with resin in an infusion process, such as a vacuum assisted infusion process.

A very versatile and advantageous embodiment is achieved when joining the tip section with the motherboard section using fibre material very similar or substantially identical to the fibre material already comprised in the principal load carrying laminates.

The fibre material may be a pre-preg material which is cured, e.g. by heating, after arranging one or more layers in the recesses. The fibre material may also be plies of dry fibre, which, after arranging them in the recesses, are infused with resin and cured. When a vacuum assisted infusion process is used in these embodiments, a particularly advantageous embodiment has been achieved.

It is also possible to combine pre-preg material with dry fibre material in the recesses.

According to examples of the disclosure, the joining step e), and optionally steps e1) and e2), comprise
gluing a pre-cured element or a pre-formed part to the first recess and the second recess, optionally to the first leading edge recess and to the second leading edge recess, and/or to the first trailing edge recess and to the second trailing edge recess. It may be advantageous to use pre-formed parts glued into the recesses. This may be comparatively easy to handle. Furthermore, the quality of the pre-formed part may be assessed prior to arranging them in the recesses, making this option advantageous with respect to quality control.

It may also be possible to glue pre-formed parts into the recesses, still leaving som space for overlamination with dry fibre and resin and/or pre-preg material.

In an example of the disclosure, said first layup comprises a pre-formed part, said preformed part having an outer surface corresponding to a desired aerodynamic profile at the joining section.

It may be possible to pre-form a part with a desired surface geometry. Especially the outer surface may advantageously have a shape seamlessly integrating with the desired aerodynamic profile of the wind turbine blade. In this way, less skill from the worker is required to achieve the correct profile.

According to examples of the disclosure, the joining section has a length of 1 - 5 m in the longitudinal direction. To obtain a strong enough joint between the tip section and the mainboard section, the joining section may need to have a minimum length.

According to examples of the disclosure, the width of the joining section is between 0.5m and the total width of the blade from a leading edge to a trailing edge.

According to further examples of the disclosure, the taper has a depth to length ratio of between 1 to 30 and 1 to 2.

According to an examples of the disclosure, the ratio of the length of the tip section to the length of the mainboard section is between 1 to 8 and 1 to 1, preferably between 1 to 4 and 1 to 2.

The disclosure also relates to a wind turbine blade formed by joining a tip section and a mainboard section at a joining section, said joining section comprising a scarf joint bonding together a first load-carrying principal laminate integrated in a first aerodynamic shell of said tip section and a second aerodynamic shell with a second load-carrying principal laminate integrated in the second aerodynamic shell of said mainboard section.

According to the disclosure, a wind turbine blade with properties corresponding to a non-modular blade is obtained, with little or no additional weight, due to the integration of the joining section in the laminates, all additional components having a density similar to that of typical laminates.

The disclosure further relates to a tip section for a wind turbine blade, the tip section comprises a first aerodynamic shell with a first load-carrying principal laminate integrated in the first aerodynamic shell,
said first load-carrying principal laminate including a first recess at a first end of the tip section, the first recess comprising a first taper section where a thickness of the first load-carrying principal laminate is tapered in thickness towards the first end of the tip section.

According to the disclosure, a tip section is provided that can be used to be connected to a mainboard section to produce a wind turbine blade. It may be possible to use such a tip section for different wind turbine blades of different lengths, provided that the geometry at the joining section allows for it. It may thus be possible to provide a tip section that can be attached to mainboard sections of different lengths and thus providing a convenient way to produce different blades using the same tip section.

The disclosure also relates to a mainboard section for a wind turbine blade, the mainboard section comprising a second aerodynamic shell with a second load-carrying principal laminate integrated in the second aerodynamic shell, said second load-carrying principal laminate including a second recess at a second end of the mainboard section, the second recess comprising a second taper section where a thickness of the second load-carrying principal laminate is tapered in thickness towards the second end of the mainboard section.

The disclosure further relates to a kit for manufacturing a wind turbine blade, said kit comprising a tip section as described herein and a mainboard section as described herein. The kit of parts may further comprise layup or inserts for arrangement in the recesses of the tip section and mainboard section and for forming the aforementioned scarf joints.

Accordingly, there is provided a method of manufacture of a tip section for a wind turbine blade, comprising:
providing a plurality of core members;
connecting said core members to form a tip section.

Preferably, said core member comprise a cross-sectional profile substantially corresponding to a portion of a desired aerodynamic profile of a tip section for a wind turbine blade.

Preferably, the tip section comprises at least a leading edge core member and a trailing edge core member. Further preferably, the tip section further comprises a main laminate core member to be arranged between the leading edge core member and a trailing edge core member.

In one aspect, at least one of the core members is substantially hollow.

Preferably, at least one of the core members comprises a hollow braided infused core, preferably comprising glass fibre, carbon fibre, and/or a hybrid thereof.

Preferably, at least one of the core members comprises at least one pultruded reinforcement member. Preferably, said at least one pultruded reinforcement member comprises a leading edge reinforcement profile, a trailing edge reinforcement profile, and/or a main laminate reinforcement profile.

In an additional or alternative aspect, at least one of the core members is provided as a substantially non-hollow material. Preferably at least one of the core members is provided as a solid material; balsa; a vacuumised solid, e.g. vacuumised grains; and/or as a foam core having a layer, preferably a foil layer, wrapped around the foam core.

Preferably, said step of connecting comprises arranging said plurality of core members adjacent one another, and joining said plurality of core members to form a tip section having a desired aerodynamic profile.

Preferably, said step of joining comprises applying a layer around at least a portion of the surfaces of said plurality of core members. Preferably, the layer comprises a layer of fibre material, e.g. glass fibre, carbon fibre, and/or a hybrid thereof. Preferably, the layer comprises a portion of unidirectional fibre material. Additionally or alternatively, the layer comprises a portion of biax fibre material.

The method may comprise the step of applying a reinforcement material in portions of the tip section, e.g. in the main laminate section, the leading edge, and/or the trailing edge. The reinforcement material may comprise a unidirectional fibre layer, a pultruded profile, etc.

Preferably, said step of joining comprises infusing a fibre material with a resin, e.g. polyester resin, vinyl ester resin, etc., and curing said resin.

Preferably, said infusing comprises a one-shot infusion process.

In an alternative aspect, there is provided a tip section for a wind turbine blade, the tip section comprising a central load-bearing section, preferably a load bearing beam or spar box, and at least one non-load-carrying shape piece or skin member attached to said central load-bearing section.

Preferably, the tip section comprises a leading edge shape piece and a trailing edge shape piece.

In a further aspect, there is provided a tip section for a wind turbine blade, the tip section comprising a shell body, wherein a portion of the shell body projects from the remainder of the shell body in the spanwise direction towards the root-end-side of the tip section.

Preferably, said portion projects at least 1/2 metre from the remainder of the shell body, preferably between approximately 1-10 metres, further preferably approximately 1-5 metres, preferably approximately 1-2 metres.

Preferably, the shell body comprises an upwind side and a downwind side, wherein one of said upwind and downwind sides projects longer in the spanwise direction towards the root-end-side of the tip section than the other of said upwind and downwind sides.

There is also provided a mainboard section for a wind turbine blade for coupling with said tip section, wherein a portion of the tip-end-side of said mainboard section projects from the remainder of the mainboard section in the spanwise direction towards the tip-end-side of the mainboard section, the projecting portion of the mainboard section arranged to be complementary to the projecting portion of the tip section. Preferably, the projecting portion of the mainboard section is coupled with the projecting portion of the tip section, preferably by adhesive bonding.

In a further aspect, there is provided a modular wind turbine blade, the modular wind turbine blade comprising a tip section and a mainboard section, the tip section connected to the mainboard section at an interface, wherein
at least one projecting element projects from at least one of said tip section and said mainboard section and is received within at least one receiving channel provided on the other of said at least one said tip section and said mainboard section,
wherein said at least one projecting element is secured within said at least one receiving channel, preferably using an adhesive bond.

Preferably, at least one gripping arm is provided at a distal end of said at least one projecting element, wherein said at least one gripping arm is received within at least one coupling groove provided at or in said at least one receiving channel. Preferably, said at least one coupling groove has a greater depth than said at least one receiving channel. In one aspect, said at least one gripping arm and said at least one coupling groove may substantially form a linear ratchet mechanism.

In a further aspect, there is provided a modular wind turbine blade, the modular wind turbine blade comprising a tip section and a mainboard section, the tip section connected to the mainboard section at an interface, wherein
at least one coupling element, preferably a metallic plate, preferably a steel plate, projects from at least one of said tip section and said mainboard section and is received within the interior of the other of said at least one said tip section and said mainboard section,
wherein said tip section is connected to the mainboard section via a connector coupled to said at least one coupling element, preferably by bolting or a nut-and-bolt connection.

Preferably, the at least one coupling element and the connector are formed from a conductive material, wherein the at least one coupling element and the connector are conductively connected to a lightning down-conductor provided in the wind turbine blade.

In a further aspect, there is provided a modular wind turbine blade, the modular wind turbine blade comprising a tip section and a mainboard section, the tip section connected to the mainboard section at an interface, wherein
at least one threaded pin projects in a spanwise direction from at least one of said tip section and said mainboard section and is received within a threaded hole provided in the other of said at least one said tip section and said mainboard section,
wherein said tip section is connected to the mainboard section by a coupling of said threaded pin in said threaded hole.

It will be understood that there is provided a tip section for a wind turbine blade as described in any of the above embodiments, and/or as manufactured by any of the above-described methods. There is further provided a wind turbine blade comprising such a tip section. Preferably, the tip section comprises between approximately 1/4 - 1/6 of the spanwise length of the wind turbine blade. There is further provided a wind turbine comprising such a wind turbine blade.

### Description of the Disclosure and Invention

Embodiments of the disclosure and invention will now be described, by way of example only, with reference to the accompanying drawings, in which:
Fig. 1 shows a wind turbine;
Fig. 2 shows a schematic view of a wind turbine blade according to the invention;
Fig. 3 shows a schematic view of an airfoil profile of the blade of Fig. 2;
Fig. 4 shows a schematic view of the wind turbine blade of Fig. 2, seen from above and from the side; and
Figs. 5-24 illustrate various examples of tip section construction and tip system connections, according to the disclosure, of which Fig. 10 is particularly relevant for the claimed invention.

It will be understood that elements common to the different embodiments of the invention have been provided with the same reference numerals in the drawings.

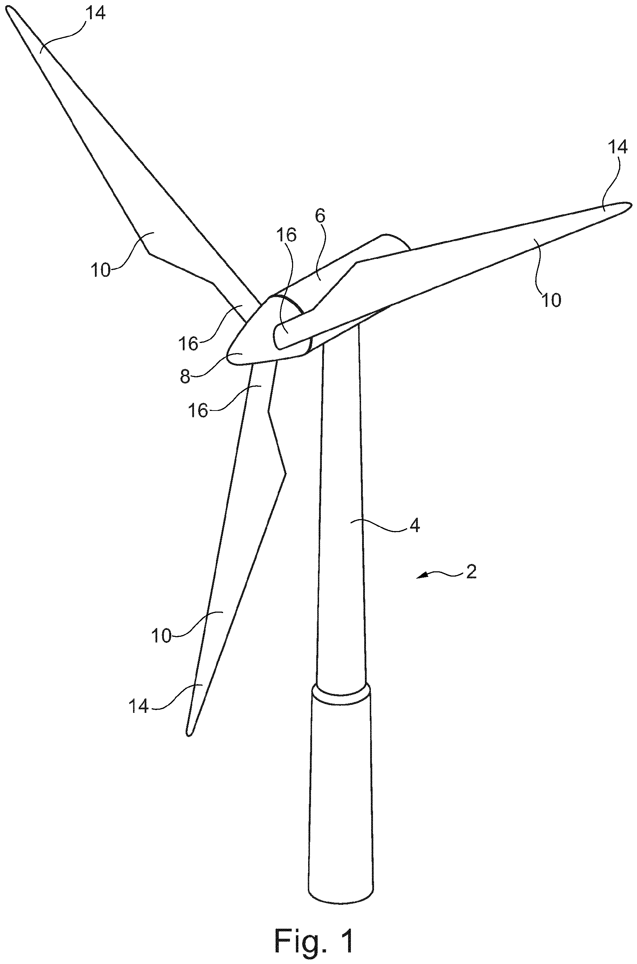

Fig. 1 illustrates a conventional modern upwind wind turbine 2 according to the socalled "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8. The rotor has a radius denoted R.

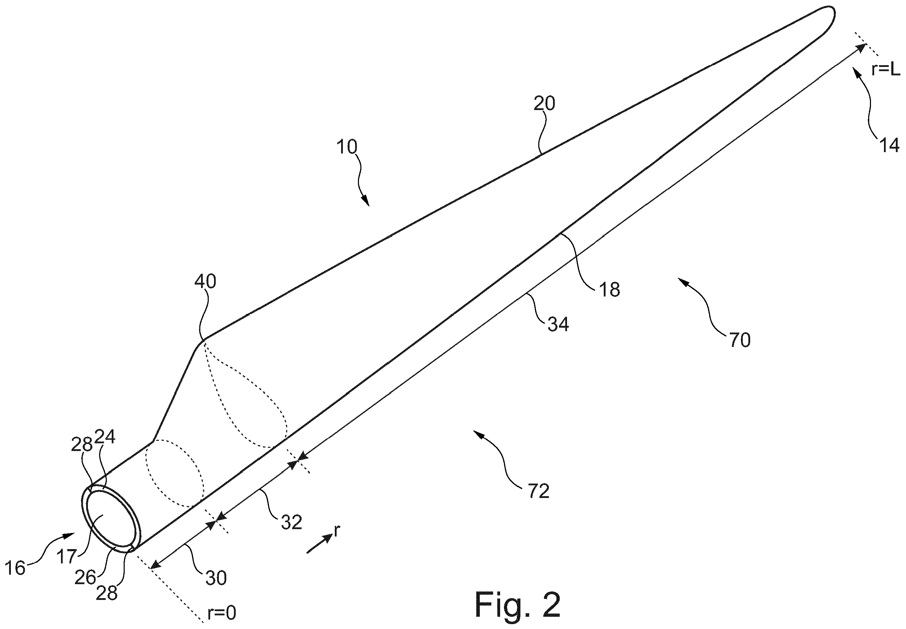

Fig. 2 shows a schematic view of a wind turbine blade 10. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 is typically constant along the entire root area 30. The transition region 32 has a transitional profile 42 gradually changing from the circular or elliptical shape 40 of the root region 30 to the airfoil profile 50 of the airfoil region 34. The chord length of the transition region 32 typically increases substantially linearly with increasing distance *r* from the hub.

The airfoil region 34 has an airfoil profile 50 with a chord extending between the leading edge 18 and the trailing edge 20 of the blade 10. The width of the chord decreases with increasing distance *r* from the hub.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

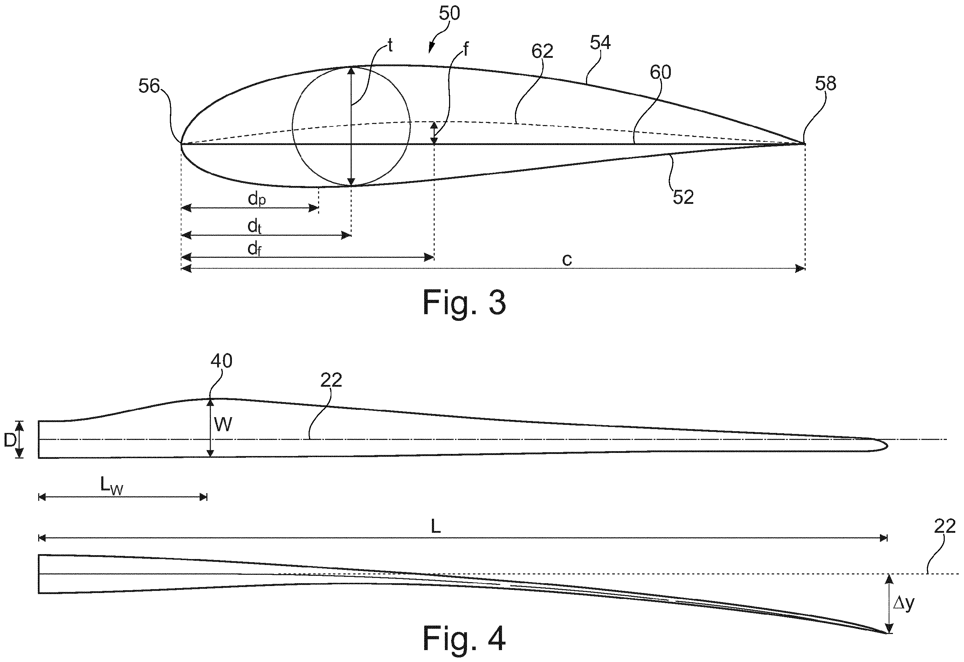

Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor- normally face towards the windward (or upwind) side and the leeward (or downwind) side, respectively. The airfoil 50 has a chord 60 with a chord length c extending between a leading edge 56 and a trailing edge 58 of the blade, known as the a chordwise direction. The airfoil 50 has a thickness t, which is defined as the distance between the pressure side 52 and the suction side 54. The thickness *t* of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber *f*. The asymmetry can also be defined by use of parameters called the upper camber (or suction side camber) and lower camber (or pressure side camber), which are defined as the distances from the chord 60 and the suction side 54 and pressure side 52, respectively.

Airfoil profiles are often characterised by the following parameters: the chord length c, the maximum camber *f*, the position *d_{f}* of the maximum camber *f*, the maximum airfoil thickness *t*, which is the largest diameter of the inscribed circles along the median camber line 62, the position *dₜ* of the maximum thickness *t,* and a nose radius (not shown). These parameters are typically defined as ratios to the chord length *c*. Thus, a local relative blade thickness *tlc* is given as the ratio between the local maximum thickness *t* and the local chord length *c*. Further, the position *dₚ* of the maximum pressure side camber may be used as a design parameter, and of course also the position of the maximum suction side camber.

Fig. 4 shows some other geometric parameters of the blade. The blade has a total blade length *L*, which is defined along the spanwise direction of the blade. As shown in Fig. 2, the root end is located at position *r* = 0, and the tip end located at *r* = *L*. The shoulder 40 of the blade is located at a position *r* = *L_{w}*, and has a shoulder width *W,* which equals the chord length at the shoulder 40. The diameter of the root is defined as *D*. Further, the blade is provided with a prebend, which is defined as *Δy*, which corresponds to the out of plane deflection from a pitch axis 22 of the blade.

The wind turbine blade 10 generally comprises a shell made of fibre-reinforced polymer, and is typically made as a pressure side or upwind shell part 24 and a suction side or downwind shell part 26 that are glued together along bond lines 28 extending along the trailing edge 20 and the leading edge 18 of the blade 10. Wind turbine blades are generally formed from fibre-reinforced plastics material, e.g. glass fibres and/or carbon fibres which are arranged in a mould and cured with a resin to form a solid structure. Modern wind turbine blades can often be in excess of 30 or 40 metres in length, having blade root diameters of several metres. Wind turbine blades are generally designed for relatively long lifetimes and to withstand considerable structural and dynamic loading.

With reference to Fig. 2, according to the disclosure the wind turbine blade is initially provided in at least two sections - at least a first section towards the tip end 14 of the blade 10, the tip end section indicated generally at 70, and at least a section comprising the root end 16 of the blade 10, herein referred to as the mainboard section 72. The separate sections 70,72 can be joined together to form at least a portion of the wind turbine blade 10.

Preferably, the connection between the sections 70,72 must be light weight and durable. While Fig. 4 shows a pre-bent blade, it will be understood that no pre-bend is necessary in the tip section 70. Preferably, the tip section 70 comprises 1/6th to 1/4th of the total blade length.

Preferably, the tip section 70 can be provided in a variety of different lengths and geometries, to allow for scalability of design.

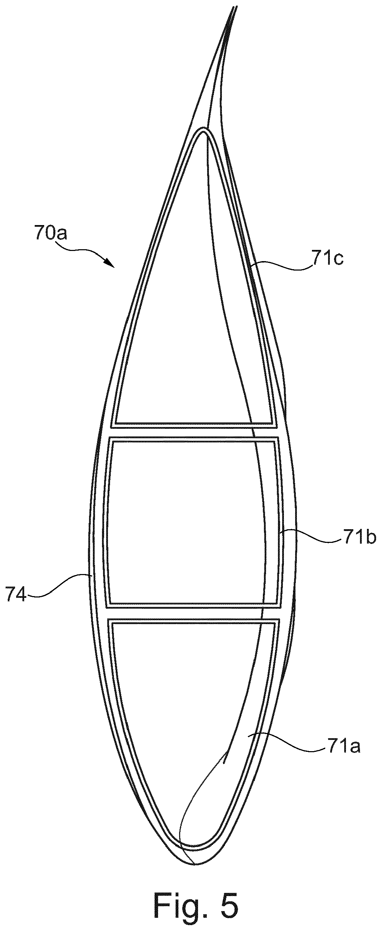

With reference to Fig. 5, a first example of a tip system for a wind turbine blade is shown, showing a tip section 70a looking from the root-end-side of the tip section towards the tip end 14.

In this embodiment, the tip section 70a comprises three cores arranged to form a leading edge portion 71a, a trailing edge portion 71b, and a main laminate portion 71c. The core portions 71a,71b,71c are preferably three hollow braided infused cores, further preferably with pultruded profiles at the leading edge, trailing edge, and/or main laminate sections of the respective cores 71a,71b,71c.

The cores 71a,71b,71c may comprise Glass Fibre Reinforced Polymer (GFRP), but it will be understood that carbon fibres may additionally or alternatively be used.

The cores 71a,71b,71c can be positioned together to effectively form a mandrel or forming core, to which skin layers, which may comprise layers of glass and/or carbon fibre material, can be applied to or braided around.

The package, including the cores 71a,71b,71c and the skin layers 74, may be placed within a mould to form the desired shape of the tip section 70. The package can then be infused with a resin and cured to form the tip section 70. Preferably, the package is infused in a one-shot moulding process. The skin layers 74 are preferably infused, but it will be understood that portions of the surfaces of the cores 71a,71b,71c may be infused with resin during the moulding process.

It will be understood that the cores 71a,71b,71c may be formed on members (not shown) which may be retained in position within the interior of the cores 71a,71b,71c before and/or during the infusion process, and removed thereafter. The members may comprise relatively rigid elements, flexible filling material and/or inflatable elements for ease of removal.

This embodiment provides a relatively light-weight tip section 70 which is relatively easy to manufacture, and may be suitable for automation. The tip section 70 comprises no adhesive bond lines, and accordingly eliminates the possibility of bond line failure in the tip section 70, while reducing the weight of the tip section 70. Scalability may be provided by simply lengthening tools used to form the core sections 71a,71b,71c

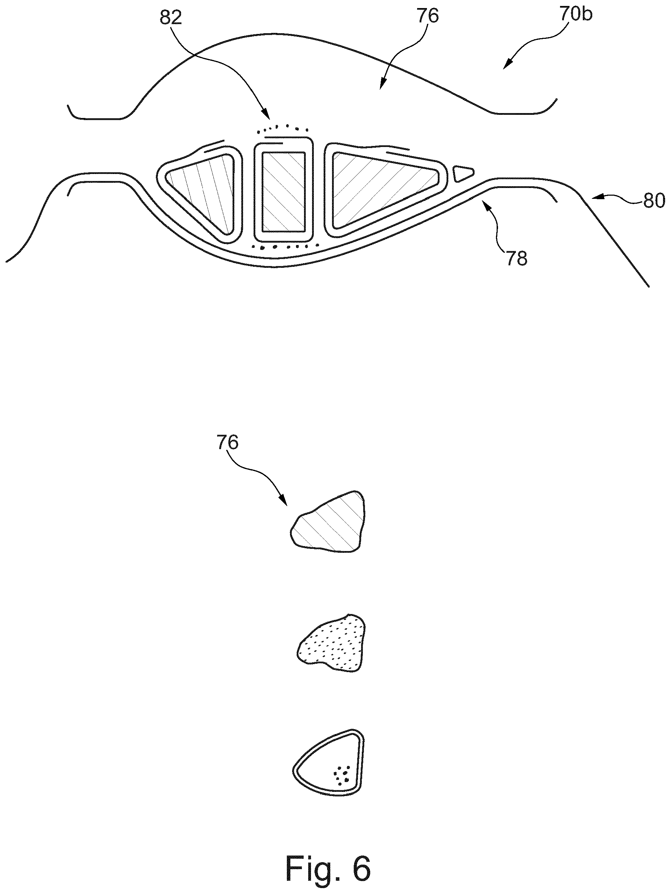

A similar embodiment is indicated in Fig. 6, wherein a tip section 70b is shown looking from the root-end-side of the tip section towards the tip end 14.

In this embodiment, in contrast to the embodiment of Fig. 5, three non-hollow cores 76 are used to form the tip section 70b. As indicated in Fig. 6, the cores 76 may be formed from a solid material, may comprise a vacuumised solid to form a core structure (e.g. grains), and/or may comprise a foam core provided with a sealing foil (e.g. to prevent the ingress of resin).

The cores 76 may be arranged in a mould 78, preferably on top of at least one layer of fibre material, e.g. biax fibre material 80. Additional layers of fibre material may be provided adjacent the cores 76, e.g. unidirectional fibres 82 positioned beneath and on top of the cores 76 in the region of the main laminate portion of the tip section 70b. Further layers of fibre material (not shown) may be positioned on top of the cores 76 in the mould 78, before the mould 78 is closed and the fibre material infused with resin to form the tip section 70b.

Due to the use of non-hollow cores 76, it may be possible to reduce or eliminate the use of pultruded reinforcement elements in the tip section 70b, and/or to reduce or eliminate the use of separate forming members to form the initial cores.

It will be understood that the features of the embodiments of Figs. 5 and 6 may be combined in a hybrid embodiment, e.g. wherein a portion of a tip section comprises non-hollow core sections and a portion comprises hollow core sections.

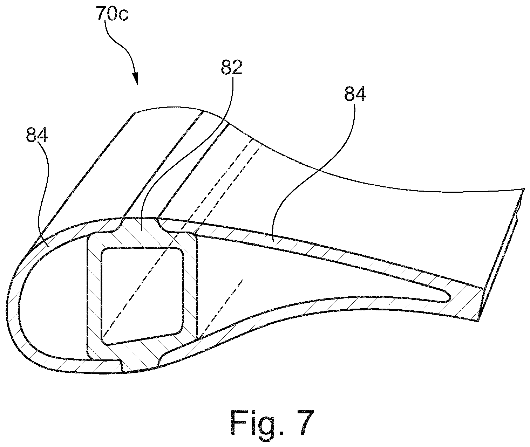

A further embodiment of a tip section 70c according to the disclosure is shown in Fig. 7, wherein the tip section 70c comprises a central load-bearing section 82, preferably a load bearing beam or spar box, wherein non-load-carrying shape pieces 84 can be provided at the leading edge and/or the trailing edge of the tip section 70c. In the embodiment of Fig. 7, the tip section 70c is formed wherein non-load-carrying shape pieces 84 are attached at the leading edge and trailing edge sides of the load-bearing section 82, such that a portion of the load-bearing section 82 is exposed on the surface of the tip section 70c. However, it will be understood that the non-load-carrying shape pieces 84 may alternatively be attached to the load-bearing section 82 wherein the non-load-carrying shape pieces 84 form a shell substantially around the entire load-bearing section 82, which is located in the interior of the tip section 70c.

The non-load-carrying shape pieces 84 may be attached to the load-bearing section 82 using any suitable connection, e.g. adhesive bonding or bonding via resin infusion joint, mechanical connectors, e.g. bolting, riveting.

This embodiment provides several advantages. In a first aspect, the joint between components is not located at the leading edge or trailing edge, and accordingly may only experience loading due to aerodynamic forces. Furthermore, the load concentrations and load path can be easily calculated using the central load-bearing section 82, which can easily be designed as appropriate. The load-bearing section 82 may be manufactured using any suitable manufacturing process, and can be relatively easily scaled as desired.

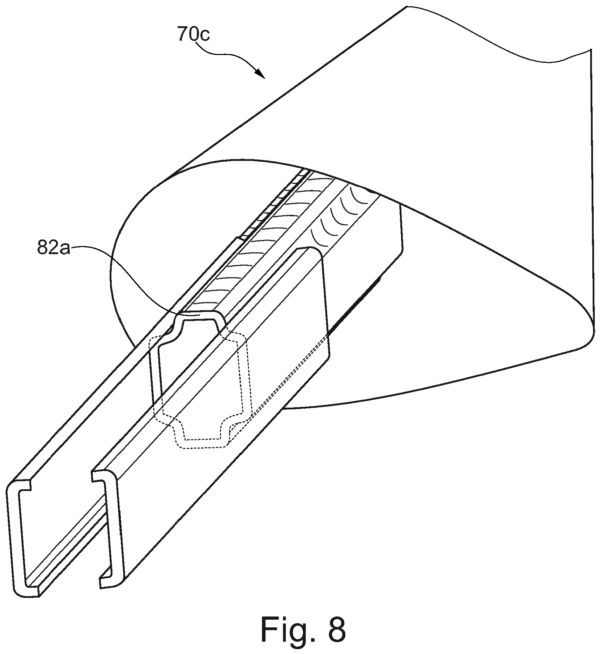

With reference to Fig. 8, an embodiment of a tip section connection according to the disclosure is illustrated for the embodiment of Fig. 7. In this figure, the central load-bearing section 82 extends from the tip section 70c to provide a connection member 82a, which can be received within an open end (not shown) of a mainboard section 72 of a sectional blade 10. The connection member 82a may be received within and connected to an appropriate portion of the mainboard section 72, e.g. internal shear webs, a spar box or beam, etc. (as illustrated in outline in Fig. 8).

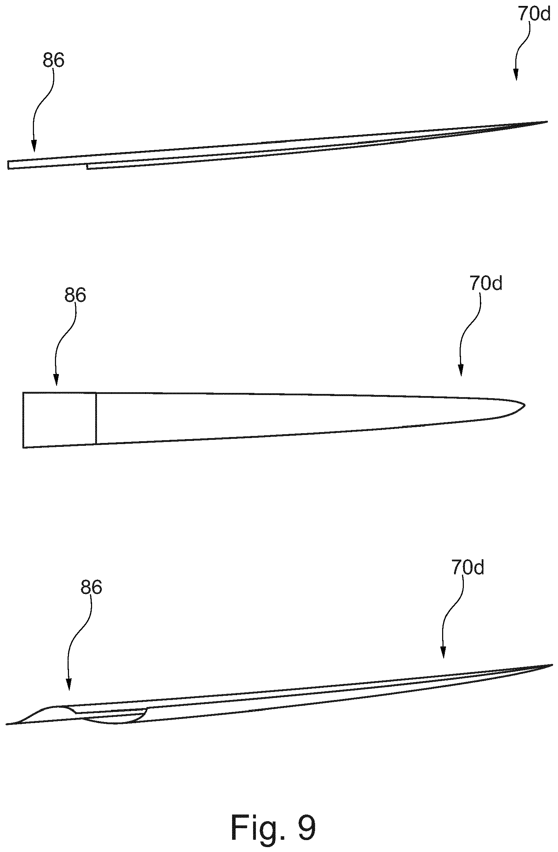

An alternative embodiment of a tip section connection is illustrated in Fig. 9. In this embodiment, a tip section 70d is provided wherein a section 86 of the external surface of the section, e.g. on the upwind or downwind side of the tip section, is longer in the spanwise direction towards the root end 16 of the blade 10 than the opposite surface. E.g. the upwind side 86 may be 1-2 metres longer in the spanwise direction than the downwind side.

Similarly, in the mainboard section (not shown) the side on the opposed surface to the projecting side 86 of the tip section 70d extends longer in the spanwise direction towards the tip end 14 of the blade 10.

This may be accomplished by extending the main laminate part of the corresponding projecting sections of the tip section and the mainboard section of the blade 10 by corresponding distances to create a stepped transition between the sections at the interface between sections.

Accordingly, the tip section 70d may be joined to the mainboard section by connecting the projecting portion of the tip section 70d with the projecting portion of the mainboard section. It will be understood that the sections may be joined using any suitable connection, as described above. Preferably, adhesive is applied along at least a portion of the interface between the sections, e.g. along bond lines provided at the edges of the surfaces of the shells of the projecting portions. Additionally or alternatively, the sections may be joined using overlamination between components.

A connection between the sections over a spanwise distance, e.g. at least 1-2 meters, can provide for a smooth transfer of loads between the blade sections. In addition, a relatively large glue area between sections can more easily distribute the shear forces involved in the structure. Furthermore, the configuration provides relatively easy access to glue surfaces before the tip section 70d is joined with the mainboard section.

In this embodiment, the mainboard section 72 may be provided with a relatively low pre-bend, wherein the tip section 70d may have a relatively larger pre-bend.

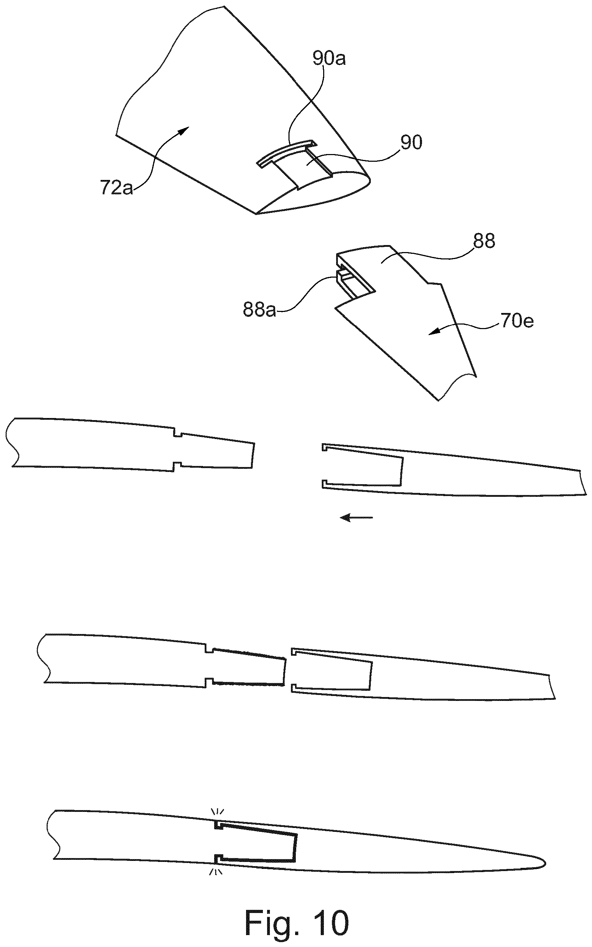

In Fig. 10, a further embodiment of a tip section connection is shown. In this embodiment, upper and lower projecting elements 88 project from opposite surfaces of the tip section 70e. The projecting elements 88 comprise inwardly-facing gripper arms 88a. Correspondingly, the mainboard section 72a comprises receiving channels 90 defined on external surfaces of the mainboard section 72a at opposed sides of the mainboard section 72a, the receiving channels 90 extending in a substantially spanwise direction from the tip-end-side of the mainboard section 72a. The length of the projecting elements 88 in the spanwise direction is substantially the same as the length of the receiving channels 90 in the spanwise direction.

Coupling grooves 90a are provided at the opposite ends of the receiving channels 90 from the tip-end-side of the mainboard section 72a, the coupling grooves 90a having a greater depth than the adjacent receiving channels 90. The coupling grooves 90a extend in a direction substantially transverse to the spanwise direction.

For coupling of the tip section 70e and the mainboard section 72a, adhesive may be applied in the receiving channels 90 and/or on the internal surfaces of the projecting elements 88. The projecting elements 88 are received within the receiving channels 90 as the tip section 70e is moved towards the mainboard section 72a, wherein the projecting elements 88 may be deflected as the gripper arms 88a contact the surface of the receiving channels 90. Once the gripper arms 88a reach the end of the receiving channels 90, the arms 88a snap into the coupling grooves 90a at the end of the channels 90 to provide a mechanical connection between the sections 70e,72a.

The tip section 70e can then be further secured to the mainboard section 72a by the curing of suitable adhesive, and/or further mechanical connections, e.g. bolting, riveting, overlamination, etc.

Optionally, and as shown in Fig. 10, the coupling grooves 90a may extend by a length which is greater than the width of the receiving channels 90, for example so that a visual inspection of the presence of adhesive between the arms 88a and the grooves 90a may be performed after coupling.

While in Fig. 10, adhesive is applied between the coupling sections of the tip system, additionally or alternatively, adhesive may be applied at the interface between the sections 70e,72a after the arms 88a are received within the grooves 90a, e.g. through appropriate inlets (not shown) provided in the system, and/or through the sides of the coupling grooves 90a (which may be wider than the projecting elements, as described above).

While Fig. 10 shows the projecting elements 88 projecting from the tip section 70e and received on the mainboard section 72a, it will be understood that additionally or alternatively the projecting elements 88 may project from the mainboard section to be received on the tip section in appropriate channels and grooves.

Additionally or alternatively, while the embodiment of Fig. 10 shows the receiving channels 90 defined on an external surface of the blade section with the projecting elements 88 having inwardly-facing gripper arms 88a, it will be understood that the tip system connection may at least partially be defined on the interior of a blade, wherein at least one receiving channel and coupling groove is defined on an internal surface of a tip or mainboard section, and a corresponding projecting element comprises an outwardly-facing gripper arm.

Furthermore, while the gripper arms 88a and the coupling grooves 90a are shown as substantially straight elements, it will be understood that the arms 88a and/or grooves 90a may have any suitable profiles to provide for improved performance of the connection, e.g. a saw-tooth or dimpled profile. Additionally or alternatively, the projecting elements 88 and/or the receiving channels 90 may have appropriate profiling, e.g. to ensure that a minimum bond line distance is maintained between bond surfaces - corrugation, dimpling, etc.

This embodiment provides a resilient connection system, which can provide for improved quality control, as the connection between sections can be confirmed by a visual inspection of the insertion of the gripper arms into the coupling grooves, and/or an aural indication of the coupling via a "click" sound formed by the snapping of the arms 88a into the coupling grooves 90a.

In addition, while the embodiment of Fig. 10 shows a single coupling groove 90a provided at the end of the receiving channel 90, it will be understood that a plurality of coupling grooves may be provided along the length of the channel 90, wherein the length by which the projecting elements 88 are received within the channel may be varied. In this regard, the grooves and arms may be arranged as a ratchet system within the channel, e.g. a one-way ratchet system.

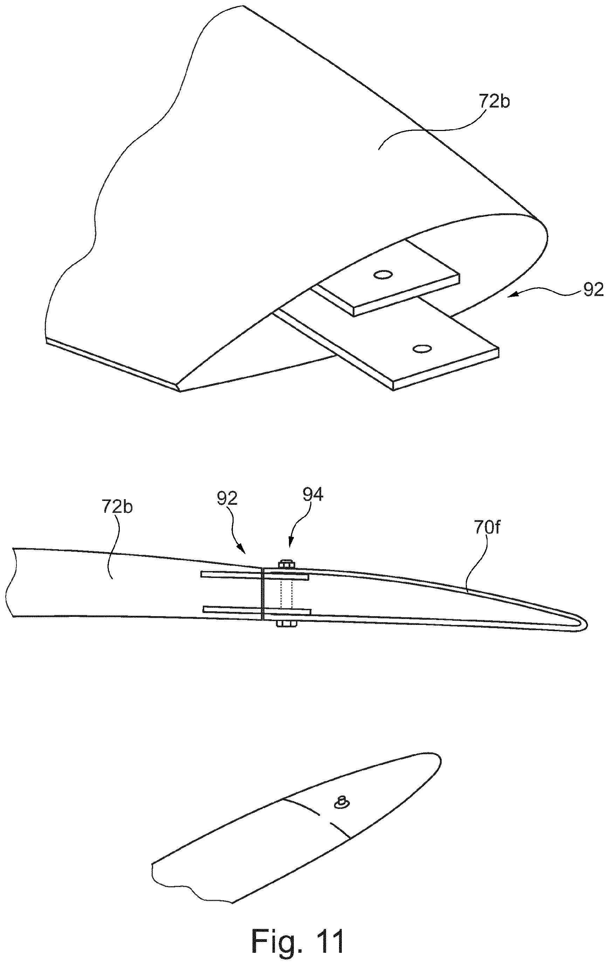

With reference to Fig. 11, a further embodiment of a tip section connection is shown. In this embodiment, a pair of coupling elements 92, for example steel plates, project from an open end of a mainboard section 72b of a blade 10. A hollow tip section 70f may be positioned over the coupling elements 92, wherein apertures defined on the tip section 70f are aligned with corresponding apertures on the coupling elements 92. Accordingly, the tip section 70e may be mechanically attached to the coupling elements 92, e.g. via a nut-and-bolt connection 94. Appropriate other connections may also be used in addition or as an alternative to the nut-and-bolt connection, e.g. adhesive connections. In addition, the steel plates of Fig. 11 may be replaced by any other material, e.g. composite material, fibre-reinforced composite material. It will be understood that the configuration of connection system may be additionally or alternatively implemented on the opposite sections, e.g. the coupling elements 92 provided extending from a tip section.

In this case, as the coupling elements 92 and the connection 94 may be provided as conductive metallic elements, they may be coupled with the lightning protection system of the blade 10, e.g. the connection 94 may be provided as a lightning receptor for the blade 10.

This embodiment provides a relatively simple and straightforward connections system, which can easily be implemented in existing blade manufacturing systems.

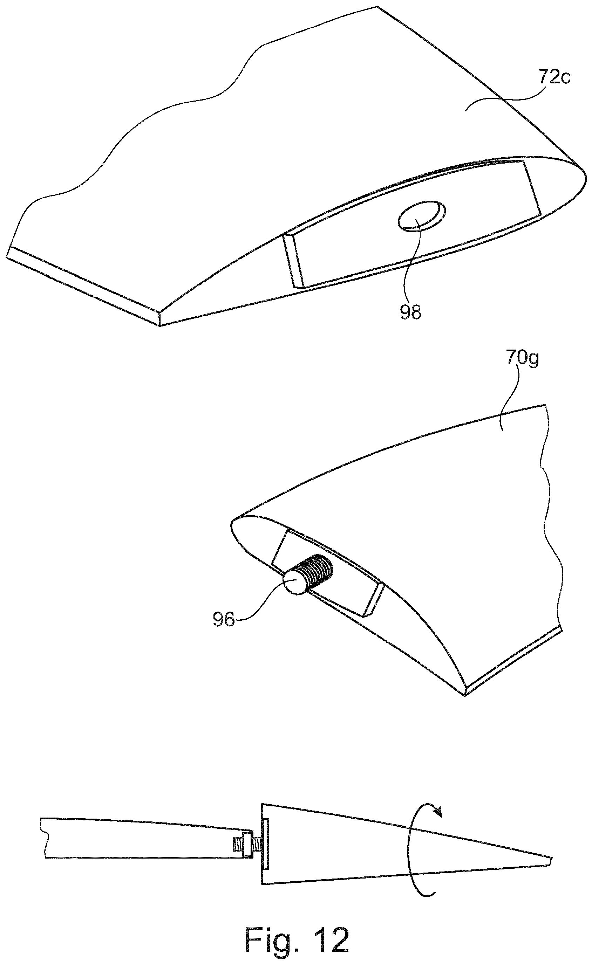

With reference to Fig. 12, a further embodiment of a tip section connection is shown. In this embodiment, a screw thread connection is provided between blade sections, wherein a threaded pin 96 projects from either a tip section or a mainboard section, wherein the threaded pin 96 is arranged to be received within a threaded hole 98 provided in the other of the sections, such that the tip section 70g may be relatively easily screwed onto the mainboard section 72c, for a robust connection between the elements. This connection may optionally be supplemented by adhesive applied at the interface between sections after the screwing operation has been completed, to improve the bonding between components.

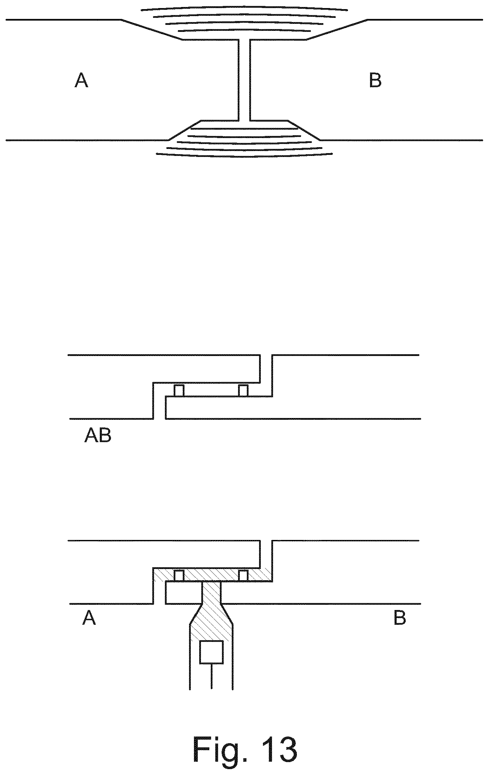

With reference to Fig. 13, examples of possible tip connections are shown between blade sections A and B. In a first aspect, blade sections A and B may be positioned adjacent one another, wherein a channel is defined at the interface between blade sections, and wherein a scarf joint may be formed between the sections by laying up fibre material in the channel and infusing the fibre material with a resin, e.g. vinyl ester resin, to bond the blade sections together.

In a second aspect, spacers may be used at the interface between blade sections A and B, wherein the spacers act to set a bondline thickness between components. An adhesive or resin can be supplied to the interface to bond the sections together with an appropriate bondline thickness guaranteed.

While the embodiments have been shown with a longitudinally extending bondline, it is also possible to utilise a scarf joint or a double-scarf joint to form the interface. The joint may be formed directly between load-carrying structures of the two parts, e.g. between principal laminates of the two parts being integrated in the shell of said parts.

It will be understood that any of the features of the above embodiments may be used in combination with the features of any of the other embodiments presented above.

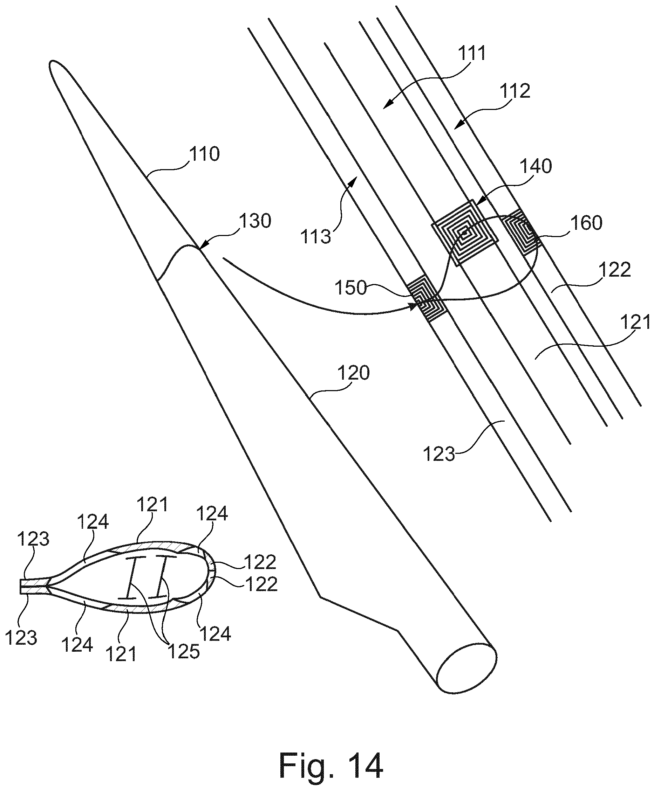

Fig. 14 illustrates a wind turbine blade according to the disclosure and a method of manufacturing or assembling such a wind turbine blade according to the disclosure. The figure illustrates a wind turbine blade, which comprises a tip section 110 and a mainboard section 120, which are assembled at a joining section 130. The tip section 110 and the mainboard section 120 both comprise an aerodynamic shell, which includes a pressure side (or upwind side) shell part and a suction side (or downwind side) shell part.

The figure also illustrates a schematic view of a cross-section of the mainboard section 120. The mainboard section comprises an aerodynamic shell with load-carrying principal laminates 121 integrated in the pressure side shell part and suction side shell part, respectively, the principal laminates forming spar caps. The aerodynamic shell may further as illustrated comprise load-carrying leading edge laminate(s) 122 and a load-carrying trailing edge laminate(s) 123. Further, the blade may comprise sandwich constructions 124 comprising a sandwich core material between fibre skins and arranged between the various load-carrying structures 121, 122, 123. The blade further comprises shear webs 125 that are connected internally in the blade between the principal laminates 121.

The tip section 110 is formed similar to the mainboard section, i.e. with load-carrying principal laminates 111 integrated in the aerodynamic shell and optionally a load-carrying leading edge laminate 112 and a load-carrying trailing edge laminate 113.

The tip section 110 and the mainboard section 120 are as illustrated connected to each other at the joining section 130 via a first layup 140 or insert forming a first scarf joint connecting the load-carrying principal laminates 111, 121 of the tip section and the mainboard section, respectively, a leading edge layup 150 or insert forming a leading edge scarf joint connecting the load-carrying leading edge laminates 112, 122 of the tip section and the mainboard section, respectively, and a trailing edge layup 140 or insert forming a trailing edge scarf joint connecting the load-carrying trailing edge laminates 113, 123 of the tip section and the mainboard section, respectively.

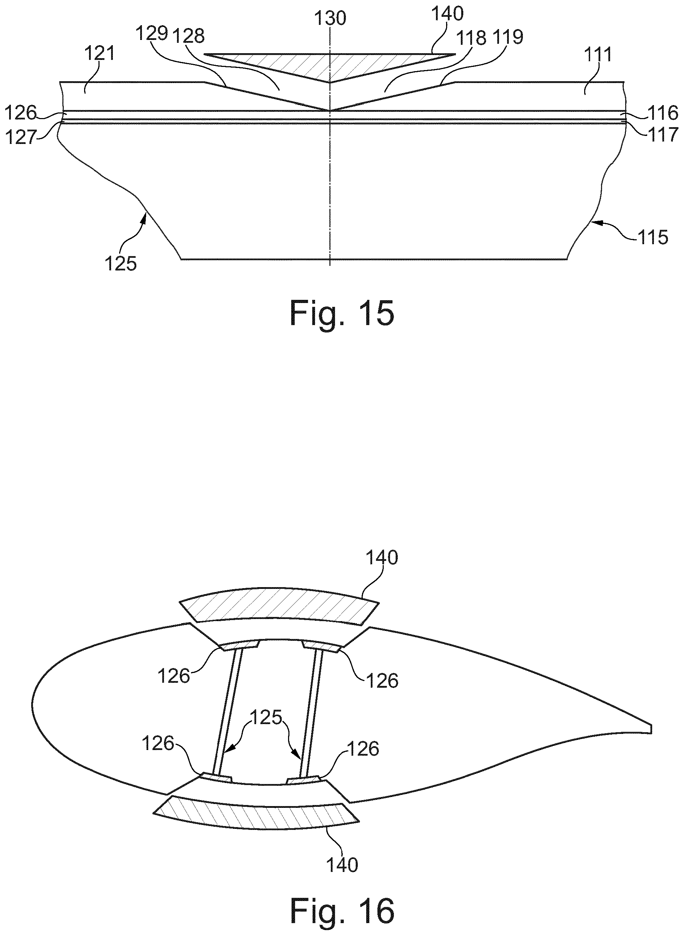

Fig. 15 schematically shows a longitudinal cross-sectional view of a part of the blade. The tip section 110 as previously mentioned comprises a load-carrying principal laminate 111 and a shear web 115 having a shear web flange 117 being bonded to the principal laminate 111 via an adhesive bond line 116. Equivalently, the mainboard section 120 as previously mentioned comprises a load-carrying principal laminate 121 and a shear web 125 having a shear web flange 127 being bonded to the principal laminate 121 via an adhesive bond line 126.

It is seen that the tip section 110 is formed such that the load-carrying principal laminate 111 comprises a recess 118 at the end facing the joining section 130, wherein the recess 118 comprises a taper section 119, where a thickness of the principal laminate 111 is tapered towards said end of the tip section 110. Similarly, the mainboard section 120 is formed such that the load-carrying principal laminate 121 comprises a recess 128 at the end facing the joining section 130, wherein the recess 128 comprises a taper section 129, where a thickness of the principal laminate 121 is tapered towards said end of the mainboard section 120.

The scarf joint is formed by a layup 140 that is arranged in the recesses 118, 128 and which is arranged to abut the taper section 119 of the principal laminate 111 of the tip section 110 and the taper section 129 of the principal laminate 121 of the tip section 120. Thereby, the layup forms a first scarf joint part to the tip section 110 and a second scarf joint part to the mainboard section 120.

Fig. 16 shows a cross-sectional view through the wind turbine blade. In addition to the features shown in Figs. 14 and 15, the figure merely illustrates that the recesses and the joining layups advantageously also may be tapered in the transverse direction of the blade.

The taper sections ensure that a strong assembly is achieved without any stiffness transitions. Further, the method provides a simple method of applying the layup to assemble the wind turbine blade and at the same time achieving a smooth aerodynamic finish between the tip section and the mainboard section of the blade.

In general, it is recognised that the load-carrying laminates are formed by fibre-reinforced laminates that comprises a plurality of fibre-reinforcement layers, often comprising 10-50 or 20-50 fibre-reinforcement layers. The taper sections may be formed by arranging ends of the fibre-reinforcement layers in a tapered arrangement. The individual layers may be arranged as ply-drops such that a step-wise taper is achieved in order to form a stepped scarf joint surface, or the individual layers may be cut taperingly in order to form a smooth scarf joint surface. The taper sections may also be formed by a post-moulding operation, e.g. by grinding the end surface in order to form a taper section.

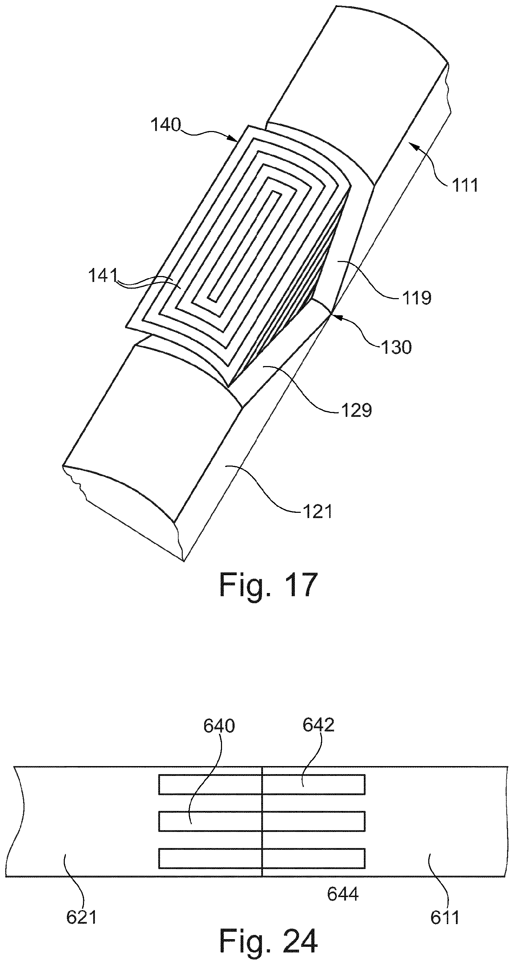

Fig. 17 illustrates on embodiment for arranging the layup 140 in the recesses of the principal laminate 111, 121. The layup 140 comprises a number of fibre plies 141. The fibre plies 141 may be arranged individually to form the layup 140. Alternatively, the layup 140 may be provided as a pre-form comprising the fibre plies 14, e.g. connected via stiching, a tackifier or the like, or as a pre-cured element, which is adhesively bonded in the recesses.

Figs. 15-17 have been illustrated for the main layup 140 only. However, it is clear that similar layups may be provided for attaching the leading edge laminates and the trailing edge laminates.

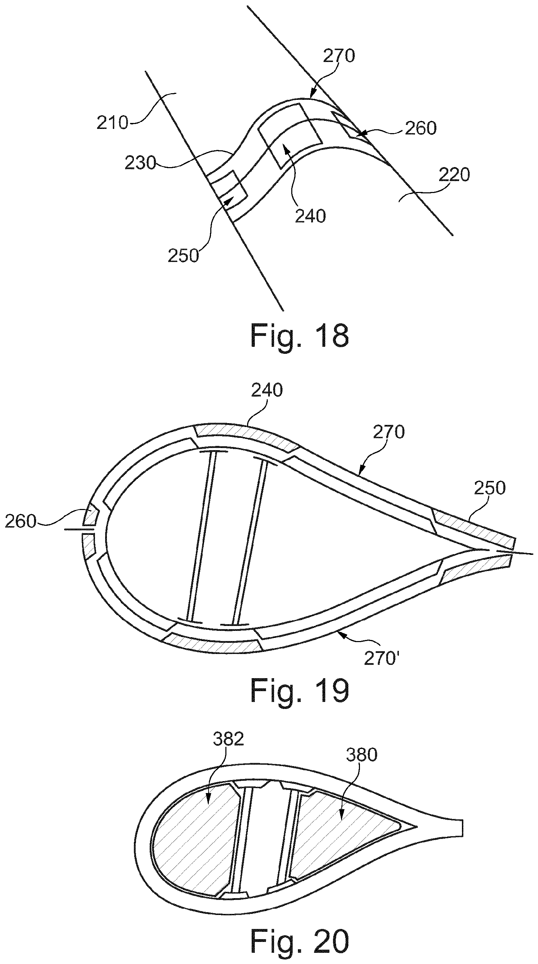

Figs. 18 and 19 illustrate another way of assembling a wind turbine blade by connecting a tip section 210 and a mainboard section 220 at a joining section 230. In the illustrated method, a circumferentially extending attachment part 270 comprising a first layup 240, a second layup 250, and a third layup 260 is arranged in one step in order to connect the tip section 210 and the mainboard section 220. The circumferentially extending attachment part 270 is shaped such that the first layup is arranged in the recesses of the load-carrying principal laminates, the second layup 250 is arranged in recesses of the trailing edge laminates, and the third layup 260 is arranged in recesses of the leading edge laminates.

The circumferentially extending attachment part 270 may partly or wholly be formed as a pre-shaped or pre-cured solid part. It may for instance be possible to provide the parts that connect the layups 240, 250, 260 as solid parts and let layups be provided as wet or dry fibre-reinforcement material. However, it is also possible to form the circumferentially extending attachment part 270 as a preform, where the layups 240, 250, 260 are arranged on a backing scrim or layer. The backing scrim may form the outer surface of the joining section, or alternatively an over-lamination may be carried out in order to form the outer surface. The backing scrim or over-lamination layer may for instance be made of a biaxial fibre-reinforcement layer.

The circumferentially extending attachment may be formed as a single piece extending all the way around the blade, or alternatively it may as illustrated in Fig. 19 be formed by a first attachment part 270 and a second attachment part 270' for connecting the suction side and the pressure side of the blade, respectively.

In the embodiments shown in Fig. 14-19, the tip section and the mainboard section have been connected by joining the load-carrying structures of the blade shells. However, it is also advantageous to connect the sandwich construction parts of the blades, e.g. by adhesively bonding the sandwich constructions parts via a butt joint or a scarf joint. However, it may in some circumstances be difficult to connect the sandwich construction parts. Therefore, it may be advantageous to close off the ends of the tip section and the mainboard section, respectively, by use of bulkheads. This may for instance as illustrated in Fig. 20 be carried out by arranging a trailing edge bulkhead 380 and a trailing edge bulkhead 382. Due to the connection between the principal laminates of the tip section and the mainboard section, it is not necessary to provide a bulkhead between the shear webs. However, it is of course possible to provide an additional bulkhead between the shear webs or to provide a single bulkhead extending in the entire cross-section of the blade section.

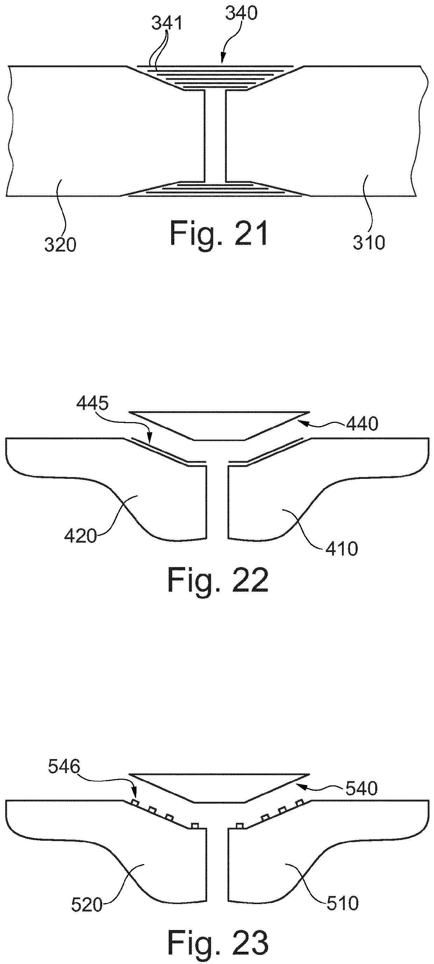

As previously mentioned, it is possible to provide the layup and scarf joints in a number of different ways. In a first highly advantageous method illustrated schematically in Fig. 21, a tip section 310 and a mainboard section 320 are assembled by arranging layups 340 comprising a plurality of fibre plies 341 in recesses formed in the load-carrying principal laminates. The layup 340 may be provided as a wet layup, i.e. as pre-pregs, or it may be provided as dry fibre-reinforcement material, or a combination thereof. It may be necessary to add additional resin to the dry fibre material or pre-preg material, and said resin is subsequently cured or hardened in order to form a composite scarf joint. The resin may be applied by hand lamination or by forming a mould cavity, e.g. by arranging a vacuum foil across the recesses and layup and injecting a resin.

In a second method illustrated in Fig. 22, a layup 440 in form of a pre-formed or premoulded solid piece is utilised to connect a tip section 410 and a mainboard section 420. The layup 440 is adhered to recesses of the load-carrying principal laminates by using an adhesive or alternatively or addition thereto a pre-wetted or saturated interface ply 445. The layup 440 may be held in place with a clamping device to ensure correct geometry and placement.

In a third method illustrated in Fig. 23, a layup 540 in form of a pre-formed or premoulded solid piece is utilised to connect a tip section 510 and a mainboard section 520. The recesses of the load-carrying laminates (or alternatively the layup 540) are provided with spacers to provide a correct bondline thickness and channels between the recess and the layup 540. Thus, a cavity and channels are formed such that an adhesive may flow in said cavity. The adhesive may thus be injected into the cavity, e.g. from one end, and once a flow front reaches the other end, the injection may be stopped.

In the previously described embodiments, the connections between the tip section and the mainboard section have been provided by a single set of recesses in load-carrying laminates and a single layup only. However, it is also possible to establish the connection by providing a plurality of sets of recesses and mating layups, e.g. two or three, in the various load-carrying laminates. Fig. 24 shows an example of such an embodiment illustrating a load-carrying principal laminate 611 of the tip section and a load-carrying principal laminate 621 of the mainboard section. In the shown embodiment, three longitudinally extending recesses are formed and aligned at the end section of the principal laminates 611, 621, and a first layup 640, a second layup 642, and third layup 644 are arranged in said recesses. Accordingly, the connection between the tip section and the mainboard section may be formed partly by for instance direct butt joints and intermediate scarf joints formed via said layups 640, 642, 644.

The invention is not limited to the embodiments described herein and may be modified or adapted without departing from the scope of the present invention, which is defined by the appended claims.

## Claims

1. A modular wind turbine blade, the modular wind turbine blade comprising a tip section (70e) and a mainboard section (72a), the tip section (70e) connected to the mainboard section (72a) at an interface, wherein
projecting elements (88) project from opposite surfaces of at least one of said tip section (70e) and said mainboard section (72a), the projecting elements (88) comprising inwardly-facing gripper arms (88a), and wherein the other section of said tip section and said mainboard section (72a) comprises receiving channels (90) for receiving the projecting elements (88) and coupling grooves (90a) for a snap-connection to the inwardly-facing gripper arms (88a).

2. The modular wind turbine blade of claim 1, wherein the projecting elements (88) project from the tip section (70e), and the receiving channels and grooves are formed in the mainboard section (72a).

3. The modular wind turbine blade of claim 1 or 2, wherein the projecting elements (88) and the receiving channels extend substantially in a spanwise direction of the blade.

4. The modular wind turbine blade of any of claims 1-3, wherein lengths of the projecting elements (88) are substantially the same as lengths of the receiving channels.

5. The modular wind turbine blade of any of claims 1-4, wherein the coupling grooves are provided at distal ends of the receiving channels, the coupling grooves having a greater depth than adjacent receiving channels, wherein the coupling grooves extend in a direction substantially transverse to a spanwise direction of the modular wind turbine blade.

6. The modular wind turbine blade of any of claims 1-5, wherein the internal surfaces of the projecting elements (88) are adhesively bonded to the receiving channels.

## Patentansprüche

1. Modularer Windkraftanlagenflügel, wobei der modulare Windkraftanlagenflügel einen Spitzenabschnitt (70e) und einen Mainboard-Abschnitt (72a) umfasst, wobei der Spitzenabschnitt (70e) an einer Verbindungsstelle mit dem Mainboard-Abschnitt (72a) verbunden ist, wobei
vorstehende Elemente (88) von gegenüberliegenden Oberflächen von mindestens einem von dem Spitzenabschnitt (70e) und dem Mainboard-Abschnitt (72a) vorstehen, wobei die vorstehenden Elemente (88) nach innen weisende Greifarme (88a) umfassen, und wobei der andere Abschnitt von dem Spitzenabschnitt und dem Mainboard-Abschnitt (72a) Aufnahmenuten (90) zum Aufnehmen der vorstehenden Elemente (88) und Kopplungsschlitze (90a) für eine Schnappverbindung mit den nach innen weisenden Greifarmen (88a) umfasst.

2. Modularer Windkraftanlagenflügel nach Anspruch 1, wobei die vorstehenden Elemente (88) von dem Spitzenabschnitt (70e) vorstehen und die Aufnahmenuten und die Schlitze in dem Mainboard-Abschnitt (72a) gebildet sind.

3. Modularer Windkraftanlagenflügel nach Anspruch 1 oder 2, wobei sich die vorstehenden Elemente (88) und die Aufnahmenuten im Wesentlichen in einer Spannenrichtung des Flügels erstrecken.

4. Modularer Windkraftanlagenflügel nach einem der Ansprüche 1-3, wobei Längen 9der vorstehenden Elemente (88) im Wesentlichen gleich Längen der Aufnahmenuten sind.

5. Modularer Windkraftanlagenflügel nach einem der Ansprüche 1-4, wobei die Kopplungsschlitze an distalen Enden der Aufnahmenuten bereitgestellt sind, wobei die Kopplungsschlitze eine größere Tiefe als benachbarte Aufnahmenuten aufweisen, wobei sich die Kopplungsschlitze in einer im Wesentlichen zu einer Spannenrichtung des modularen Windkraftanlagenflügels querlaufenden Richtung erstrecken.

6. Modularer Windkraftanlagenflügel nach einem der Ansprüche 1-5, wobei die Innenoberflächen der vorstehenden Elemente (88) an die Aufnahmenuten geklebt sind.

## Revendications

1. Pale d'éolienne modulaire, la pale d'éolienne modulaire comportant une section formant bout (70e) et une section formant panneau principal (72a), la section formant bout (70e) étant raccordée à la section formant panneau principal (72a) au niveau d'une interface, dans laquelle
des éléments faisant saillie (88) font saillie depuis des surfaces opposées d'au moins l'une parmi ladite section formant bout (70e) et ladite section formant panneau principal (72a), les éléments faisant saillie (88) comportant des bras de préhension orientés vers l'intérieur (88a), et dans laquelle l'autre section parmi ladite section formant bout et ladite section formant panneau principal (72a) comporte des canaux de réception (90) servant à recevoir les éléments faisant saillie (88) et des rainures d'accouplement (90a) à des fins de raccordement par pression au niveau des bras de préhension orientés vers l'intérieur (88a).

2. Pale d'éolienne modulaire selon la revendication 1, dans laquelle les éléments faisant saillie (88) font saillie en provenance de la section formant bout (70e), et les canaux de réception et des rainures sont formés dans la section formant panneau principal (72a).

3. Pale d'éolienne modulaire selon la revendication 1 ou la revendication 2, dans laquelle les éléments faisant saillie (88) et les canaux de réception s'étendent sensiblement dans une direction allant dans le sens de l'envergure de la pale.

4. Pale d'éolienne modulaire selon l'une quelconque des revendications 1 à 3, dans laquelle les longueurs des éléments faisant saillie (88) sont sensiblement les mêmes que les longueurs des canaux de réception.

5. Pale d'éolienne modulaire selon l'une quelconque des revendications 1 à 4, dans laquelle les rainures d'accouplement sont mises en oeuvre au niveau des extrémités distales des canaux de réception, les rainures d'accouplement ayant une plus grande profondeur par rapport aux canaux de réception adjacents, dans laquelle les rainures d'accouplement s'étendent dans une direction sensiblement transversale par rapport à une direction allant dans le sens de l'envergure de la pale d'éolienne modulaire.

6. Pale d'éolienne modulaire selon l'une quelconque des revendications 1 à 5, dans laquelle les surfaces internes des éléments faisant saillie (88) sont reliées de manière adhésive sur les canaux de réception.
